Europäisches Patentamt

European Patent Office

Office européen des brevets

(19)

(11) Publication number: **0 046 807**

**A1**

(12) # EUROPEAN PATENT APPLICATION
published in accordance with Art. 158(3) EPC

(21) Application number: **81900080.3**

(22) Date of filing: **24.12.80**

Data of the international application taken as a basis:

(86) International application number:
**PCT/JP80/00322**

(87) International publication number:
**WO81/01813 (09.07.81 81/16)**

(51) Int. Cl.³: **B 23 Q 35/04**

(30) Priority: **28.12.79 JP 171779/79**
**03.04.80 JP 44273/80**

(43) Date of publication of application:
**10.03.82 Bulletin 82/10**

(84) Designated Contracting States:
**CH DE FR GB LI SE**

(71) Applicant: **HOSOI, Toshaki**
**9-10, Kamiminami 5-chome Hirano-ku**
**Osaka-shi Osaka 546(JP)**

(72) Inventor: **HOSOI, Toshaki**
**9-10, Kamiminami 5-chome Hirano-ku**
**Osaka-shi Osaka 546(JP)**

(74) Representative: **Smith, Martin Stanley et al,**
**Stevens, Hewlett & Perkins 5, Quality Court Chancery Lane**
**London WC2A 1HZ(GB)**

(54) SURFACE COPYING METHOD AND APPARATUS THEREFOR.

(57) A method and apparatus for copying a surface precisely. The method includes the steps of allowing the relative position of a stylus (S) with respect to a model (M) precede the relative position of a cutting blade (C) with respect to a workpiece (W) by a prescribed amount $e$ in the direction of travel and in parallel with the surface to be copied, resolving a vector corresponding to the amount $e$ into components along the X (or Y) and Z axes, and varying the feed rates in the direction of both the X (or Y) and Z axes in proportion to the X-axis and Y-axis components, respectively. The apparatus includes a spindle (6) having the stylus (S) fixed at the lower end thereof, spindle holding means (11), (12), (13) for holding the spindle (6) at the upper end in a circularly movable manner within a vertical plane with a predetermined radius $e$, rockably within the vertical plane and in an elevationally movable manner during the course of elevational movement, a circular motion limiting means (20) for limiting the circular motion of the spindle (6) to within a range of 180° in the elevational direction, spindle lifting and lowering means (30) for biasing the spindle (6) in such a manner that the spindle always moves downward in executing circular motion, model surface detecting means (41) for moving the spindle (6) upwardly while executing circular motion when the stylus (6) makes contact with the model (M) so that the displacement thereof exceeds the set value, a copy command unit (50) for producing a copy command signal for copying in horizontal and vertical directions in response to the rotational position of the circularly rotating arm of the spindle (6), and a copy control unit for varying the copying speed in the horizontal and vertical directions upon receipt of the signal. Another apparatus includes spindle holding means (11), (14), (15) for holding the spindle (6) in circularly movable manner with a prescribed radius $e$ while retained in the vertical state instead of the spindle holding means (11), (12), (13) of the former device.

./...

EP 0 046 807 A1

Fig 3

Fig 13

DESCRIPTION

**TITLE MODIFIED**
see front page

TITLE OF THE INVENTION

Method and apparatus for surface profiling

TECHNICAL FIELD

This invention relates to a method and an apparatus for surface (in the vertical plane)(X-Z, Y-Z axis) profiling, and more particularly to improvement for a tracer.

BACKGROUND ART

In the past as an apparatus of this kind, inventor of this invention previously developed an apparatus (Japanese Patent Kokai 49-125984, 50-082679) wherein a stylus being eccentrically fitted to a vertical spindle by constant value ahead in the profiling direction, and the spindle inclines by a certain value when the stylus engages the ascent surface of the model. This inclination value is not constant in relation to friction coefficient and adjustment of the contact pressure between the stylus and the model, and profiling speed, which being unavoidable as a cause of error as well as a difference of the outside diameter between the stylus and the cutter.

DISCLOSURE OF THE INVENTION

This invention solves above problems, and has the object to provide a method and an apparatus for surface profiling which detects in advance and has no error.

These objects are accomplished by the invention as below.

1) A method for surface profiling, which comprises:

a step where the position of a stylus relative to a model precedes the position of a cutter relative to a work piece by the constant value e in the profiling advance direction parallel to the profiling surface,

a step resolving the vector corresponding to said e into components along X axis (or Y asis) and Z axis, and

a step changing the feeding speed of X axis (or Y axis) direction and Z axis direction in proportion to said components along X axis and Z axis.

2) A method for surface profiling as claimed in Claim 1, which comprises:

a step holding a spindle with the stylus fixed at it's lower end to allow circular motion of constant radius e in the vertical plane at the upper end and at the middle part to allow swing motion in vertical plane and vertical motion,

a step engaging the stylus with the model preceding the cutter by the value e in profiling direction,

a step outputting the profiling speed command signal for horizontal direction and vertical direction corresponding to the relative position of the spindle to it's axis of circular motion, and

a step feeding these signals to the profiling operation parts for horizontal and vertical direction.

3) A method for surface profiling as claimed in Claim 1, which comprises:

a step holding the spindle with the stylus fixed at it's lower end to allow circular motion of constant radius e with vertical state,

a step engaging the stylus with the model preceding the cutter by the value e in profiling direction,

a step outputting the profiling speed command signal for horizontal direction and vertical direction corresponding to the relative position of the spindle to it's axis of circular motion, and

a step feeding these signals to the profiling operation parts for horizontal and vertical direction.

4) An apparatus for surface profiling, which comprises:

a spindle with a stylus fixed at it's lower end,

a spindle supporting means which hold the spindle at it's upper end to allow circular motion of constant radius e in the vertical plane and at it's middle part to allow swing motion in a vertical plane and vertical motion,

a limit means for circular motion limiting the circular motion of the spindle in the extent of 180 degree in the vertical direction,

an elevator means forcing always the spindle to act circular motion downwardly,

a detecting means for model surface which makes
the spindle act circular motion upwardly when the stylus
engages with the model thereby the deflection of the
spindle becomes larger than that of predetermined,

a profiling command part which outputs the profiling
command signal for horizontal direction and vertical
direction corresponding to the rotary position of circular
motion arm of the spindle, and

an operating part which changes the profiling speed
of horizontal direction and vertical direction as received
said signal.

5)   An apparatus for surface profiling, which comprises:

a spindle with a stylus fixed at it's lower end,

a spindle supporting means which hold the spindle
in vertical state to allow circular motion of constant
radius e,

a limit means for circular motion limiting the circular motion of the spindle in the extent of 180 degree
in the vertical direction,

an elevator means forcing always the spindle to act
circular motion downwardly,

a detecting means for model surface which makes the
spindle act circular motion upwardly when the stylus
engages with the model thereby the deflection of the
spindle becomes larger than that of predetermined,

a profiling command part which outputs the profiling command signal for horizontal direction and vertical direction corresponding to the rotary position of circular motion arm of the spindle, and

an operating part which changes the profiling speed of horizontal direction and vertical direction as received said signal.

BRIEF DESCRIPTION OF THE DRAWINGS

Figure 1 is a schematic front view of the profiling milling machine according to the invention,

Figure 2 is a front view of the 1st embodiment of the tracer,

Figure 2a is a cross-sectional view of the main portion taken along the line IIA - IIA of Figure 2,

Figure 3 is a cross-sectional view taken along the line III - III of Figure 3,

Figure 4 is an enlarged cross-sectional view taken along the line IV - IV of Figure 3,

Figure 5 is a cross-sectional view taken along the line V - V of Figure 4,

Figure 6 is an enlarged prespective view of the main portion of Figure 5,

Figure 7 is a plan view of the photoelectric element arrangement,

Figure 8a and 8b are front views of the profiling command plate respectively,

Figure 9a to 9g are descriptive views of surface profiling operation,

Figure 10a to 10g are descriptive views of operation for the profiling command plate at that time,

Figure 11 and 12 are another embodiments of the profiling command plate respectively,

Figure 13 is a front view of the 2nd embodiment of the tracer,

Figure 14 is a cross-sectional view taken along the line XIV - XIV of Figure 13,

Figure 15a to 15g are descriptive views of surface profiling operation according to the 2nd embodiment,

Figure 16a to 16g are descriptive views of operation for the profiling command plate at that time.


BEST MODE FOR CARRYING OUT THE INVENTION

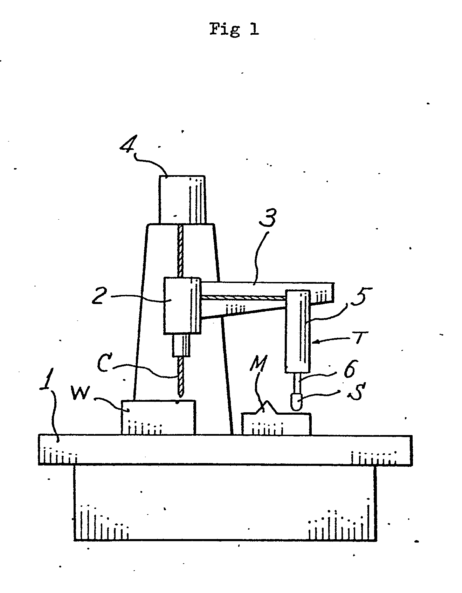

Referring now to the drawings one embodiment of the invention will be described. Figure 1 shows an entire profiling milling machine, which consists of a table 1, a milling head 2, a tracer arm 3, a Z-axis motor 4, a tracer T, a stylus S, a cutter C, a tracer main body 5 and a tracer spindle 6.

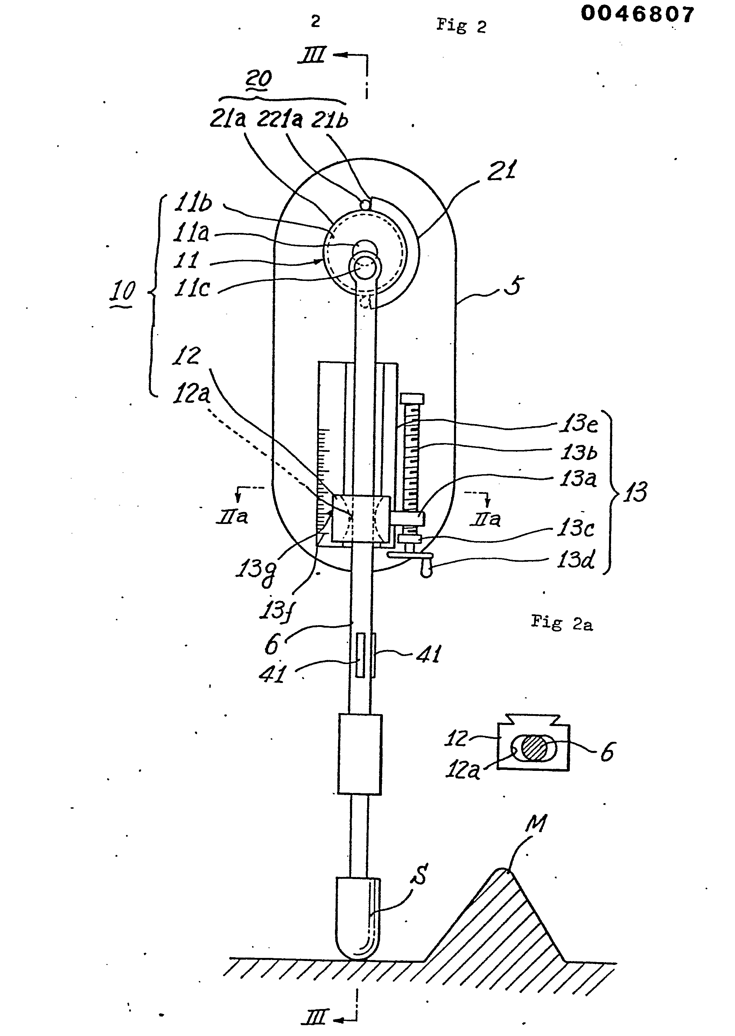

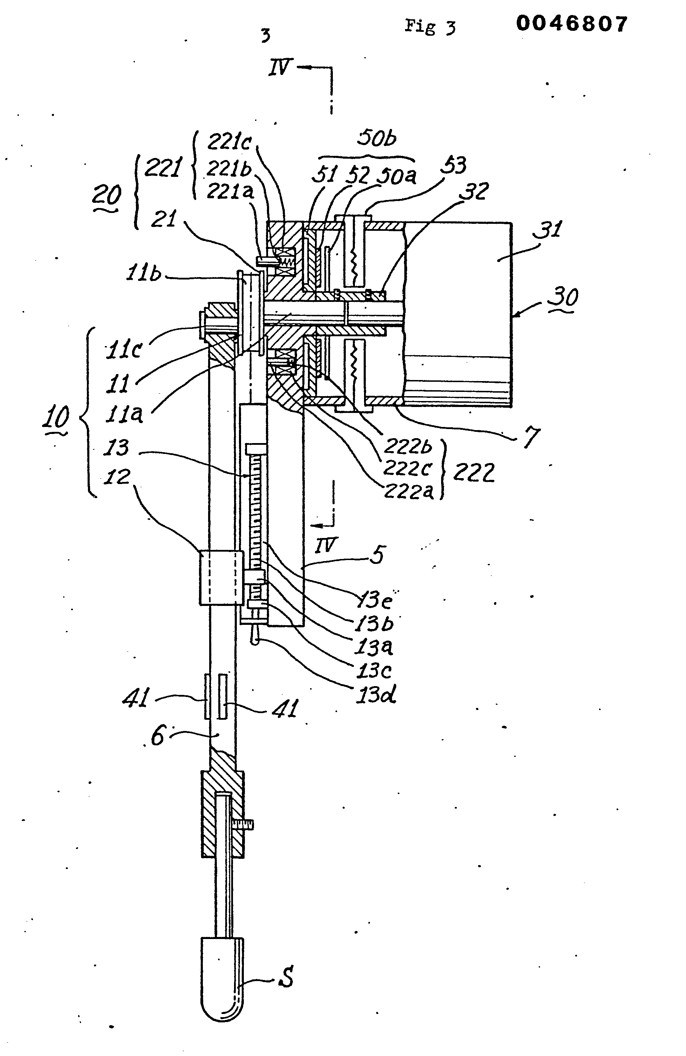

In Figure 2 and 3, a spindle supporting means 10 is shown. The spindle supporting means 10 holds the spindle at it's upper end to allow circular motion of

0046807

constant radius e in the vertical plane and at it's
middle part to allow swing motion in a vertical plane
and vertical motion, and comprises of a crank mechanism
11, a fulcrum part 12 and a hight adjusting mechanism 13
for the fulcrum part. In the crank mechanism 11, a
crank shaft 11a rotatably supported on a tracer main
body facing horizontally and perpendicularly to the Y-
axis direction, a crank arm 11b is fitted to one end of
the crank shaft. A crank pin 11c is fitted to the side
of the crank arm eccentrically against the crank shaft
11a by e.

The fulcrum part 12 is fitted to one side of the
tracer main body for supporting the spindle 6 as the
fulcrum at it's middle part. Namely, it is fitted on
the vertical line passing the rotation center of the
crank shaft 11a and on the lower position than the
crank shaft. The fulcrum part 12 has a guide hole which
is oblong at plan view and of drum form in the vertical
cross section on the center line as shown in Figure 2,
2a so that the spindle 6 may swing in the vertical plane
and more vertically.

Also, the fulcrum part 12 is adjustable in vertical
position by a hight adjusting mechanism 13. Namely,
an arm 13a is projected horizontally from the fulcrum
part 12, through which a feeding screw rod 13b rotatably
supported by a bearing 13c at the top and the bottom end

- 6 -

0046807

penetrates threadably in vertical.

There provided an adjusting handle 13d fitted at one end of the screw rod 13b, a bed 13e slidably carrying the fulcrum part 12 in vertical, a hight scale 13b marked on the bed 13e and a pointer 13g fitted to the fulcrum part 12 corresponding to the hight scale 13f. A deflection value due to contact between the spindle 6 and the model M can be maintained constant by adjusting hight of the fulcrum part 12.

A limit means for circular motion 20 is provided between the crank arm 11b and the tracer main body 5. This means limits the circular motion of the Spindle 6 in extent of 180 degree in the vertical direction. Namely, a stop plate 21 is fitted on back side of the crank arm 11, the stop plate having hitting steps at the opposite ends of circumferential surface 21a in the extent of 180 degree. A stopper 22 is projected from the front face of the tracer main body 5 for hitting these hitting steps.

Also at other end of the crank shaft 11a a spindle elevator means 30 is provided. The elevator forces always the spindle 6 to act circular motion downwardly, stops forcing downward of the spindle 6 when the stylus S engages with the model M and resistance thereof become predetermined value, and makes the spindle circularly move in opposite direction when the resistance become

0046807

larger than the predetermined value. Therefore, a servo motor 31 forced always to rotate in the constant direction is connected to the crank shaft 11a via a cylindrical joint 32.

Also, a model surface detecting means 40 is provided so that the operation signal may be emitted for X axis (or Y axis) direction and Z axis direction when detecting the engagement the stylus S with the model M. Namely, a current detecting circuit and a control circuit for rotational direction of known type are connected to an electric circuit for the servo motor 31 in a series, and the current signal from the current detecting circuit is fed to the control circuit for rotational direction.

A detecting means for horizontal and descent surface of the model is provided so as to stop the forcing rotation of the servomotor 31 when the stylus S engages with the horizontal and descent surface of the model M and the resistance become equal to the predetermined thereby current signal from the current detecting circuit being fed to the control circuit for rotational direction

and so as to rotate the servomotor 31 in opposite direction when the resistance become larger than predetermined value.

Next, strain gauses 41 as detecting means for ascent surface of the model are provided on the side face of the spindle S in X-axis direction and Y-axis direction passing through the axis shaftline of the spindle S, so as to make the servomotor 31 rotate in opposite direction detecting the spindle deflection caused by the resistance when the stylus engages with the ascent surface of the model.

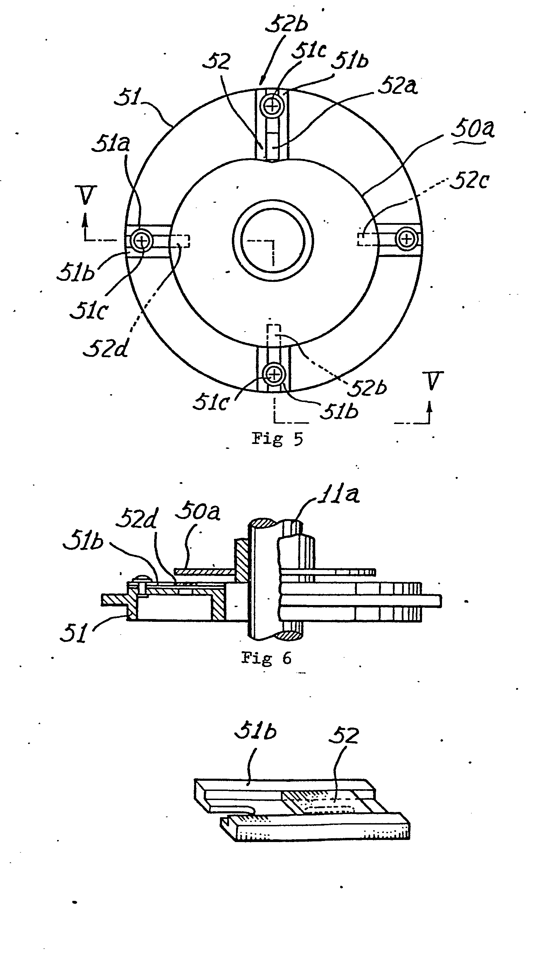

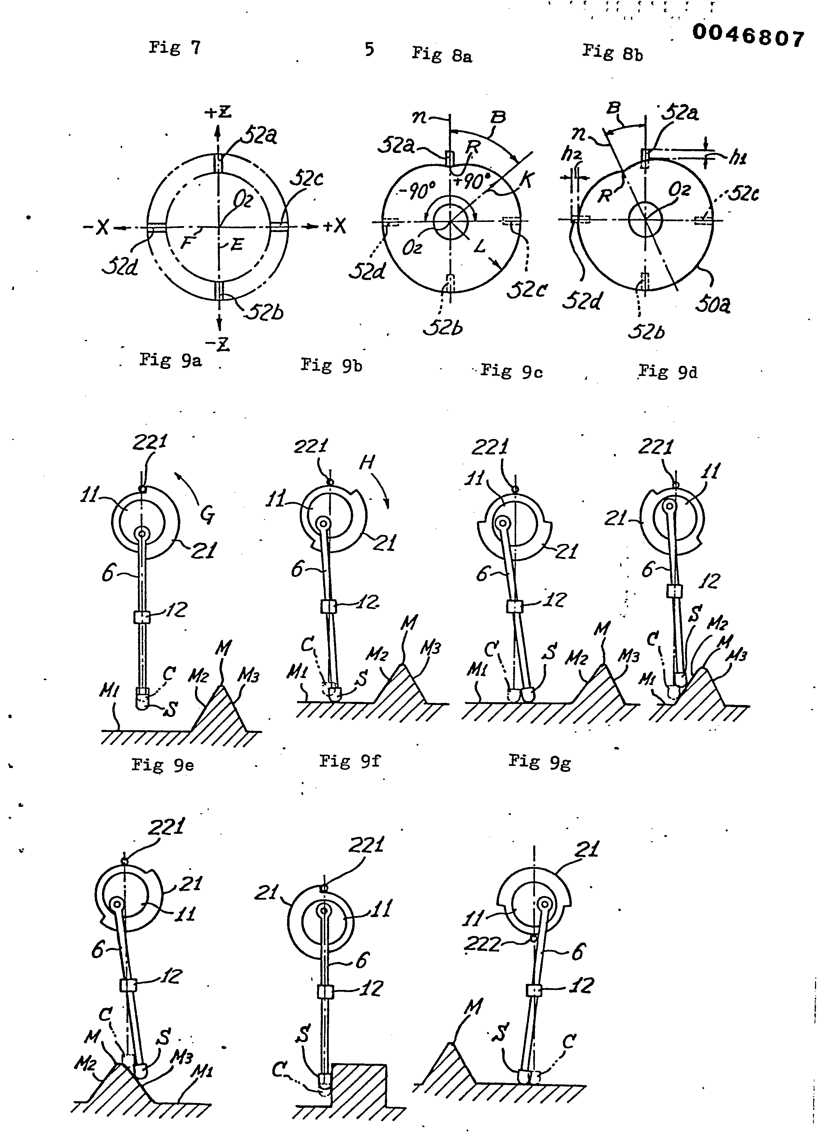

A profiling command part 50 is housed in case and, as shown in Figures 3, 4, 5 and 6, consists of a profiling speed command photomask plate 50a and a profiling speed ratio detector 50b which includes an insulation disk 51, a photoelectric element 52 and a light source 53. That is, the insulation disk 51 for mounting photoelectric element which is on the back side face of the tracer body 5 concentrically with the crank shaft 11a and fixed in the case A has four equally spaced radial grooves 51a provided on its peripheral surface, and in these grooves are fitted mounting pieces 51b by means of clamps 51c in a manner to permit free movement in the radial direction of the disk. Photoelectric transducer elements 52, as shown in Figures 7 and 8, consists of two sets four rectangular plates 52a, 52b, 52c and 52d which are fixed to mounting pieces 51b at equal intervals on the periphery of a circle concentric with shaft center $0_2$ of the crank shaft 11a, of which one set of plates 52a and 52b are opposed to the vertical moving direction (Z axis) of the table (or the milling head) while another one set of 52c and 52d are made to confront to the right and left moving direction (X axis) of the table with 90 degree interval from said set. The voltage created by these confronting two elements (52a, 52b) and (52c, 52d) are amplified to rotate motors (now shown) for driving X-axis and Z-axis of the operation part, being designed to move the milling head 2 vertically and the work table 1 in two directions of the right and the left. Light sources 53 are mounted on the case 7 confronting the photoelectric elements 52.

The profiling speed command photo mask plate 50a is mounted on the joint 32 between photoelectric elements 52 and light sources 53 with concentric state to the crank shaft 11a. And as illustrated in Figure 8a, distance L from center of rotation $O_2$ of the said plate 50a to the outer periphery is so determined that it be symmetrical to straight line n which runs through near point R and center of rotation $O_2$, from near point R at zero degree up to positive and negative 90 degrees, and that it gradually increases according to the curvature of H (1-cosB) (where, H: maximum increment of distance from center of rotation $O_2$ of command plate 50a to the outer periphery, B: an angle of radius vector K with respect to symmetrical line n of command plate 50a), and that it be constant at other angle range than mentioned above, namely, making the periphery an arc, moreover that when the near point R comes to correspond to either one of the photoelectric elements 52, for instance 52c along with rotation of command plate 50c, the photo
receiving area of 52c be maximum, and when it corresponds
to the angle range of constant distance, the photo
receiving area be zero.

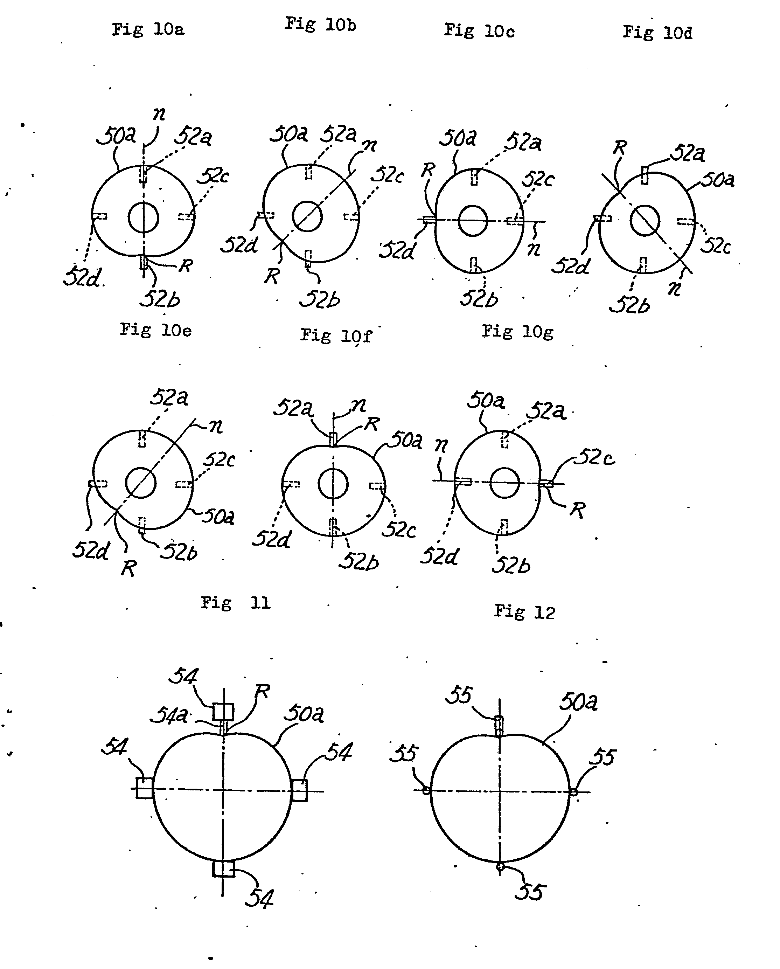

The following is a description of the operation
modes, which adduce examples of the table 1 being fed
to the left direction. Causing the motor 31 to rotate
in a counter-clockwise direction in the extent of 180
degree in Figure 2, one hitting step 21b of the stop
plate 21 is pressed against the upper stopper 221, thereby
the motor 31 stops when the resistance become predetermined value and the spindle 6 remains at the lowest
position, until the stylus S engages with the horizontal
surface $M_1$ of the model M, as shown in Figure 9a and 10a.
At this time, the near point R of the photomask plate 50a
corresponds the element 52b, the photoreceiving area of
the element 52b become maximum, other elements are all
photomasked, thus emitting the signal for lowering the
milling head 2 (or raising the table) at full speed.

As shown in Figure 9b and 10b when the stylus S
engages with the horizontal surface $M_1$ of the model M,
the motor 31 is given an additional torque of opposite
direction, thus increasing the electric current of the
motor 31, due to the resistance caused by contact of the
stylus S with the model M by means of the detecting
means for horizontal and descent surface of the model.

-13-

**0046807**

A signal making the motor 31 to rotate opposite direction is added when this current exceeds the constant
value. Thereby when the spindle 6 tends to rise and
the stylus S tends to apart from the model M, a signal
making the motor 31 to rotate again positive direction
enters because of decreasing signal. Thus repeating
increasing and decreasing of the contact pressure between the stylus S and the model M, the model and the
stylus rest in contacting state. Thereby the motor 31
rotates oppositely as the arrow H and the arm 11b rotates
gradually in clockwise direction of H with the photomask plate 50a. Then the stylus S moves circularly in
opposite direction (counter-clockwise) relative to the
fulcrum part 12, the stylus S leans right side of the
cutter.

Then, as shown in Figure 9b, 10b, the photo receiving area of the element 52b decreases, that of the element
52d increases, thereby falling speed of the milling head 2
decreases, and the X direction speed of the table increases. However, as the milling head 2 still falls,
the resistance of the motor 31 decreases as before in
the extent larger than the predetermined. Therefore,
the oppositely rotating speed of the motor 31 gradually
decreases.

And, as shown Figure 9c and 10c, at last when the
photoreceiving area of the element 52b becomes zero,

-14-

0046807

that of the element 52d becomes the largest, the milling
head 2 stops to fall and the table is fed in only left
direction with maximums speed.

Next, as in Figure 9d and 10d, when the stylus S
engages with the ascent face $M_2$ of the model M, a slight
deflection of the spindle 6 caused by that is detected
by the strain gauge 41, from which signal for opposite
rotation is given to the motor 31. Thereby the motor 31
rotates clockwise, the near point R stands between the
elements 52a and 52d, the elements 52a, 52d receive
the light, the element 52b is masked, and the signal are
emitted for feeding the milling head in upper direction
Z and the model M in the left direction -X.

Furthermore, as in Figure 9e and 10e, when the stylus
S reaches to the descent face $M_3$ of the model M, the
resistance of the stylus S disappears, then the motor 31
positively rotates, the near point R stands between the
elements 52b and 52d, the elements 52b and 52d receive
the light, the element 52a is masked, and the milling
head 2 is fed downward and the table is fed to the left.

Also, as in Figure 9f and 10f, when the stylus S
engages with the vertical ascent face of the model M,
the stylus S is pressed to the model causing the spindle
6 deflect, the motor 31 additionally rotates in clockwise direction according to the current from the strain
gause 41, as the spindle 6 reaches to the highest position the near point R confronts to the element 52a, the photoreceiving area of the element 52a become max, other elements are all masked, and X axis or Y axis feed of the table stops thus rising the milling head 2 with full speed.

And as in Figure 9g and 10g, when the table advanced to the right within a constant distance of the point where the stylus S aparts from the model inclined face $M_3$ to engage with the horizontal face $M_1$, the advance direction of the table is made opposite (right direction) by an already known position detecting means which consists of limit switch, dog, etc. (not shown), at the same time, the upper stopper 221 immerses, next the motor 31 rotates in 180 degree, after that the lower stopper 222 projects, consequently the stylus S holds it's posture biased to the left against the cutter. After the profiling operation done in the same manner, when the table advances to the left by the predetermined distance another limit switch (not shown) operates causing the table to advance again to the left.

Here, attention must be drawn to the fact that the profiling speed is constant. Suppose, in Figure 8b, that the rotation angle of line n of plate 50a with respect to the diameter on photoelectric elements 52a, 52b is B and that the photo receiving lengths of photoelectric elements 52a and 52d are $h_1$ and $h_2$ respectively.

0046807

Since the maximum photo receiving height of photoelectric element is equal to H, it follows that:

$$h_1 = H - H \cdot (1 - \cos B) = H \cdot \cos B$$

$$h_2 = H - H \cdot \{1 - \cos(90 - B)\} = H \cdot \sin B$$

Since the profiling speeds in each axial direction are respectively proportional to $h_1$ and $h_2$, the total speed in two axial directions is proportional to $\sqrt{h_1{}^2 + h_2{}^2}$. Hence, it follows that:

$$\sqrt{h_1{}^2 + h_2{}^2} = H \cdot \sqrt{\cos^2 B + \sin^2 B} = H$$

This means the profiling speed is always constant.

The stopper 22 consists of two sets of upper and lower 221, 222, and comprises of rod pieces 221a, 222a elusively accommodated in a recess provided on the side surface of the tracer main body, springs 221b, 222b forcing the rod piece in projected state and an electro-magnetic coil 221c, 222c forcing the rod piece in immersed state.

In the case Y-axis profiling direction, the upper crank crank shaft 11 faces X-axis direction.

A piezoelectric element is alternatively provided at the contact point with the spindle 6 in the guide hole 12a of the fulcrum part 12 as the detecting means for model ascent surface instead of the strain gauge 41. Other distance detecting means is also used.

Also, the table 1 and the milling head 2 may be arranged to move in vertical direction and in horizontal direction respectively.

Followings are alternatively used as other embodiments for the profiling command part which outputs the profiling speed command signal for X (or Y)-axis and Z-axis corresponding to the position of the spindle 6 relative to it's circular motion shaft 11a.

Namely, in Figure 11, an iron core 54a of differential transformer 54 or a valve spool 54a of an oil pressure pilot valve 54 is made to contact on the circumferential surface of a cam plate 50a like as the photomask plate. Or as shown in Figure 12, a wire spring 55 where strain gauge or a piezo-electric element being glued is made to contact on the circumferential surface of the cam plate 50a. Or, a resolver already known is connected to the motor shaft of the servo motor 31. Namely, the resolver outputs a sine curve current corresponding to the rotation angle, and provided with two sets of a electro-magnetic coil having two kinds of output terminal for outputting two kinds of electric current with phase difference of 90 degree. Then one of these terminals is connected with the X(or Y)-axis motor, the other with the Z-axis motor.

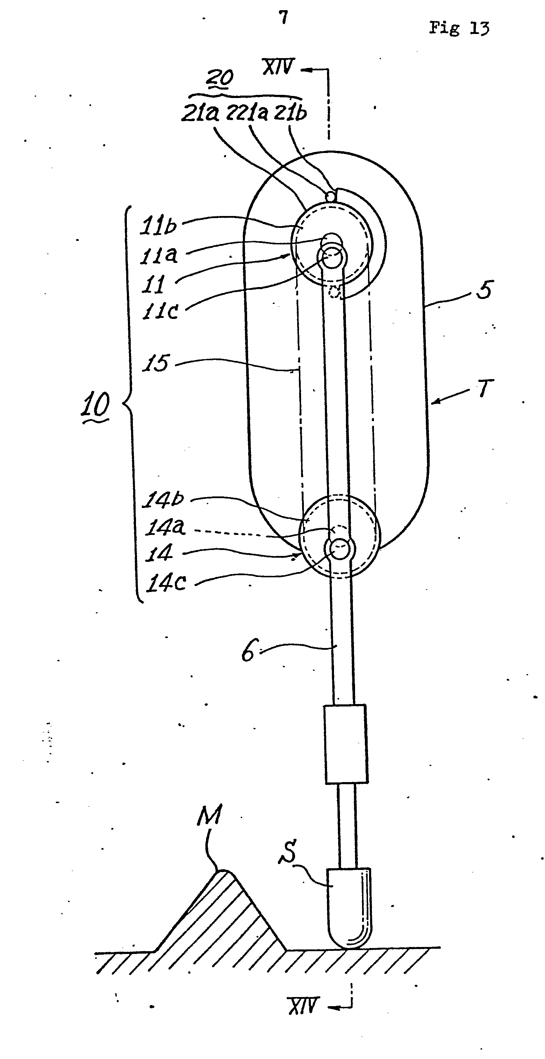

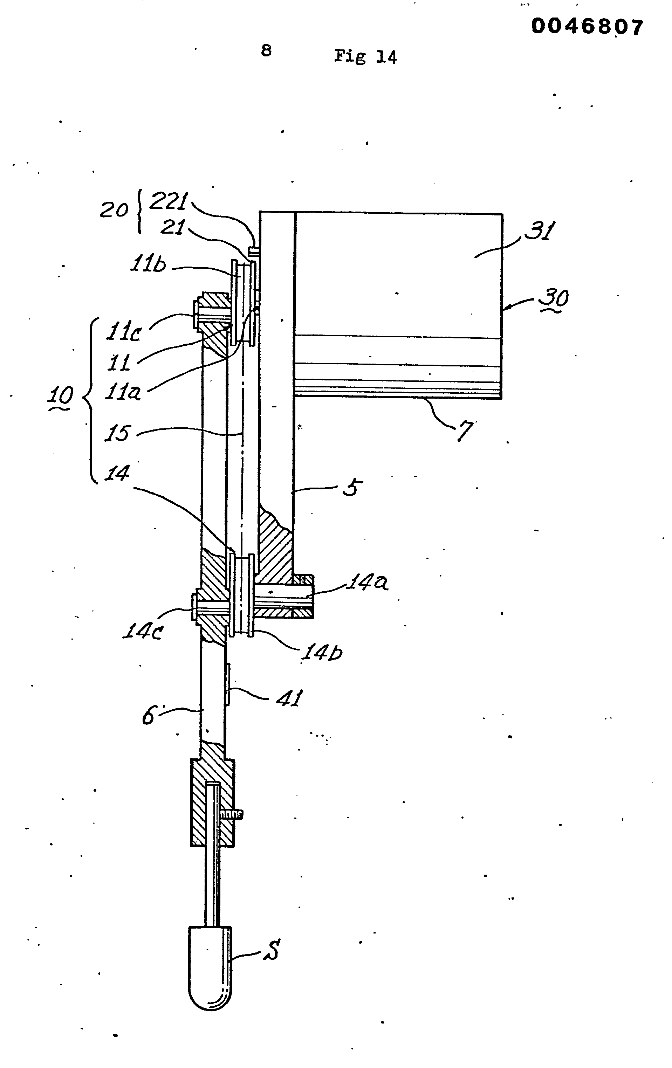

Figures 13 and 14 show the 2nd embodiment of the spindle supporting means. The spindle supporting means holds the spindle 6 in vertical state to allow circular motion of constant radius e, and comprises of an upper crank mechanism 11, a lower crank mechanism 14 and a synchronizing belt 15. In the upper crank mechanism 11, an upper crank shaft 11a is rotatably supported on the tracer main body 5 with it's axis shaftline facing horizontal Y-axis direction, to one end of which an upper crank arm 11b is fitted. The arm forms a pulley for synchronizing rotation with a lower crank arm 12b below-mentioned. To the side of the crank arm 11b is fitted an upper crank pin 11c eccentrically with the crank shaft 11a by e. Also in the lower crank mechanism 14, a lower crank shaft 14a, a lower crank arm 14b and a lower crank pin 14c are provided, in the same manner as above. Between the upper and lower crank arm pulley 11b, 14b is fitted a synchronizing belt 15. The spindle 6 is held in vertical state to allow circular motion by these upper and lower crank pin 11c, 14c.

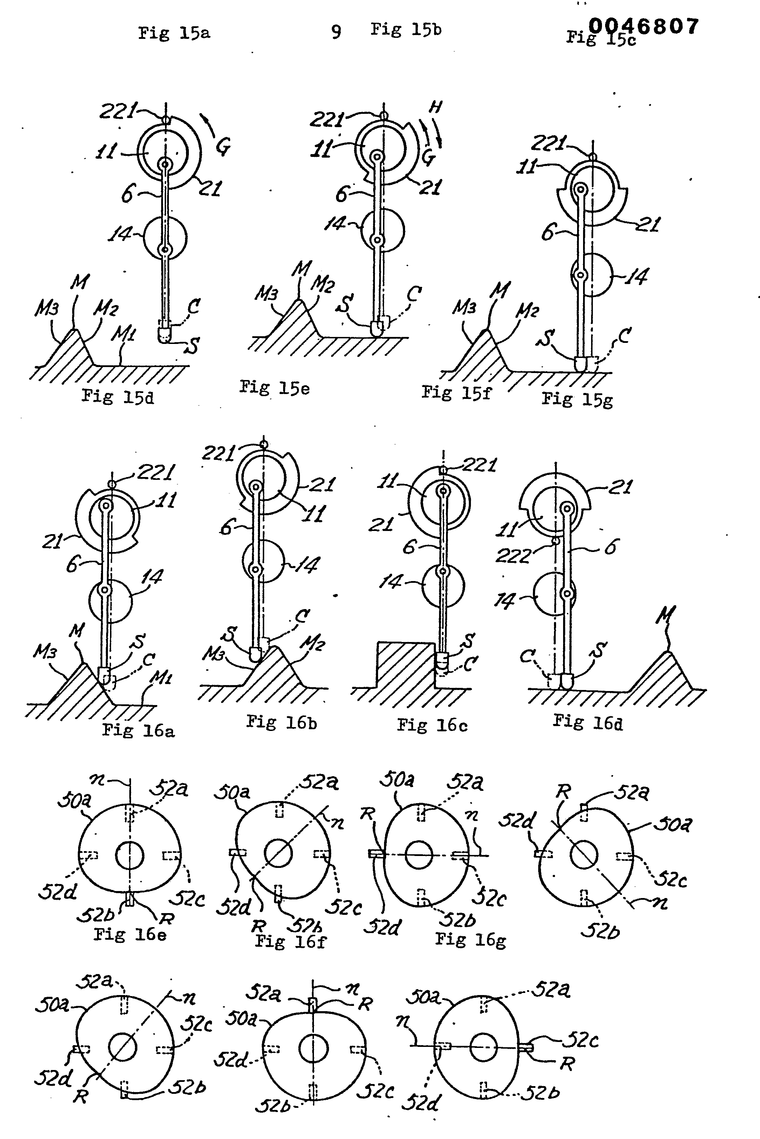

The following is a description of the operation modes, which adduce examples of the table 1 being fed to the right direction. Causing the motor 31 to rotate in a counter-clockwise direction in the extent of 180 degree in Figure 13, one hitting step 21b of the stop plate 21 is pressed against the upper stopper 221, thereby the motor 31 stops when the resistance become predetermined value and the spindle 6 remains at the lowest position, until the stylus S engages with the horizontal surface $M_1$ of the model M, as shown in Figure 15a and 16a. At this time, the near point R of the photomask plate 50a corresponds the element 52b, the photoreceiving area of the element 52b become maximum, other elements are all photomasked, thus emitting the signal for lowering the milling head 2 (or raising the table) at full speed.

As shown in Figure 13b and 14b when the stylus S engages with the horizontal surface $M_1$ of the model M, the motor 31 is given an additional torque of opposite direction, thus increasing the electric current of the motor 31, due to the resistance caused by contact of the stylus S with the model M by means of the detecting means for horizontal and descent surface of the model. The motor 31 is made to rotate opposite direction when this current exceeds the constant value. Thereby when the spindle 6 tends to rise via the upper and lower crank, the motor 31 rotates again positive direction because of disappearance of resistance. Thus the motor 31 rotates positively and negatively as shown the arrow G, H due to contacting and aparting of the stylus S and the model M causing the arms 11b, 14b to rotate gradually in clockwise direction with the photomask plate 50a theoretically with slight rotative vibration in direction G, H.

However, the vibration can not be observed in actual motion.

Then, as shown in Figures 15b, 16b, the photo receiving area of the element 52b decreases, that of the element 52d increases, thereby falling speed of the milling head 2 decreases, and the X direction speed of the table increases. However, as the milling head 2 still falls, the resistance of the motor 31 decreases as before in the extent larger than the predetermined. Therefore, the oppositely rotating speed of the motor 31 gradually decreases.

And, as shown in Figures 15c and 16c, at last when the photoreceiving area of the element 52b becomes zero, that of the element 52d becomes the largest, the milling head 2 stops to fall and the table is fed in only right direction with maximums speed.

Next, as in Figures 15d and 16d, when the stylus S engages with the ascent face $M_2$ of the model M, a slight deflection of the spindle 6 caused by that is detected by the strain gauge 41, from which signal for opposite rotation is given to the motor 31. Thereby the motor rotates clockwise with slight positive and negative rotation, the near point R stands between the elements 52a and 52d, the elements 52a, 52d receive the light, the element 52b is masked, and the signal are emitted for feeding the milling head in upper direction Z and the model M in the right direction X.

Furthermore, as in Figures 15e and 16e, when the stylus S reaches to the descent face $M_3$ of the model M, the resistance of the stylus S disappears, then the motor positively rotates, the near point R stands between the elements 52b and 52d, the element 52b and 52d receive the light, the element 52a is masked, and the milling head 2 is fed downward and the table is fed to the right.

Also, as in Figures 15f and 16f, when the stylus S engages with the vertical ascent face of the model M, the stylus S is pressed to the model causing the spindle 6 deflect, the motor 31 additionally rotates in clockwise direction according to the current from the strain gause 41, as the spindle 6 reaches to the highest position the near point R confronts to the element 52a, the photoreceiving area of the element 52a become max., other elements are all masked, and X axis or Y axis feed of the table stops thus rising the milling head 2 with full speed.

And as in Figures 15g and 16g, when the table advanced to the right within a constant distance of the point where the stylus S aparts from the model inclined face $M_3$ to engage with the horizontal face $M_1$, the advance direction of the table is made opposite (left direction) by an already known position detecting means which consists of limit switch, dog, etc. (not shown), at the same time the upper stopper 221 immerses, next the motor 31 rotates in 180 degree, after that the lower stopper 222 projects, consequently the stylus S holds it's posture biassed to the right against the cutter. After the profiling operation done in the same manner, when the table advances to the left by the predetermined distance another limit switch (not shown) operates causing the table to advance again to the right.

As the synchronizing means for the upper and lower crank mechanism 11, 14, a transmission gear such as a gearing, a sprocket & chain, and others is alternatively used instead of the belt 15.

The spindle 6 is supported to allow a circular motion and made to advance in the profiling direction against the cutter C as forementioned, however, the spindle 6 may be supported to allow slight vertical motion and the tracer T itself may be made to advance against the cutter C. Also on the contrary, the spindle 6 may be supported to allow a slight vertical motion, the model M may be made to go behind the cutter C being carried on it's exclusive table. Furthermore, the cutter C with the milling head 2 may be made to go behind the spindle 6. In a word as abovementioned, the position of the spindle 6 (stylus S) relative to the model M precedes the position of a cutter C relative to a work piece W by the constant value e parallely to the model surface.

In this invention as abovementioned, since the stylus acts a profiling engagement in advance relative to the cutter by a constant value, the cutter can act a profiling engagement detecting an unevenness of the model earlier by said advance value. For this reason, the surface profiling work can be done without any abnormal biting of the cutter.

Also, the spindle is supported to allow circular motion of constant ratius e in the vertical plane at the upper end and to allow swing motion in vertical plane and vertical at the middle part.
Therefore, the spindle supporting means can be easily manufactured.

0046807

WHAT IS CLAIMED IS:

1.    A method for surface profiling, which comprises:

a step where the position of a stylus relative to a model    precedes the position of a cutter    relative to a work piece    by the constant value e in the profiling advance direction parallel to the profiling surface,

a step resolving the vector corresponding to said e into components along X axis (or Y axis) and Z axis, and

a step changing the feeding speed of X axis (orYaxis) direction and Z axis direction in proportion to said components along X axis and Z axis.

2.    A method for surface profiling as claimed in Claim 1, which comprises:

a step holding a spindle with the stylus fixed at its lower end to allow circular motion of constant radius e in the vertical plane at the upper end and at the middle part to alow swing motion in vertical plane and vertical motion,

a step engaging the stylus with the model preceding the cutter by the value e in profiling direction,

a step outputting the profiling speed command signal for horizontal direction and vertical direction corresponding to the relative position of the spindle to it's axis of circular motion, and

a step feeding these signals to the profiling operation parts for horizontal and vertical direction.

3.    A method for surface profiling as claimed in Claim 1, which comprises:

a step holding the spindle with the stylus fixed at it's lower end to allow circular motion of constant radius e with vertical state,

a step engaging the stylus with the model preceding the cutter by the value e in profiling direction,

a step outputting the profiling speed command signal for horizontal direction and vertical direction corresponding to the relative position of the spindle to it's axis of circular motion, and

a step feeding these signals to the profiling operation parts for horizontal and vertical direction.

4.    An apparatus for surface profiling, which comprises:

a spindle with a stylus fixed at it's lower end,

a spindle supporting means which hold the spindle at it's upper end to alow circular motion of constant radius e in the vertical plane and at it's middle part to alow swing motion in a vertical plane and vertical motion,

a limit means for circular motion limiting the circular motion of the spindle in the extent of 180 degree in the vertical direction,

an elevator means forcing always the spindle to act circular motion downwardly,

a detecting means for model surface which makes the spindle act circular motion upwardly when the stylus engages with the model thereby the deflection of the spindle becomes larger than that of predetermined,

a profiling command part which outputs the profiling command signal for horizontal direction and vertical direction corresponding to the rotary position of circular motion arm of the spindle, and

an operating part which changes the profiling speed of horizontal direction and vertical direction as received said signal.

5. An apparatus for surface profiling, which comprises:

a spindle with a stylus fixed at it's lower end,

a spindle supporting means which hold the spindle in vertical state to alow circular motion of constant radius e,

a limit means for circular motion limiting the circular motion of the spindle in the extent of 180 degree in the vertical direction,

an elevator means forcing always the spindle to act circular motion downwardly,

a detecting means for model surface which makes the spindle act circular motion upwardly when the stylus engages with the model thereby the deflection of the spindle becomes larger than that of predetermined,

a profiling command part which outputs the profiling command signal for horizontal direction and vertical direction corresponding to the rotary position of circular motion arm of the spindle, and

an operating part which changes the profiling speed of horizontal direction and vertical direction as received said signal.

6.  An apparatus for surface profiling as claimed in Claim 4, wherein the spindle supporting means comprises:

a crank mechanism holding the spindle at it's upper end to allow circular motion of constant radius e in the vertical plane, and

a fulcrum part holding the spindle at it's middle part to allow swing motion in a vertical plane and vertical motion.

7.  An apparatus for surface profiling as claimed in Claim 5, wherein the spindle supporting means comprises:

an upper crank mechanism holding the spindle at it's upper end to allow circular motion of constant radius e in the vertical plane,

a lower crank mechanism holding the spindle at it's middle part to allow circular motion of constant radius e in the vertical plane, and

a crank synchronizing means giving rotation to both crank mechanisms in synchronism.

8. An apparatus for surface profiling as claimed in Claim 6 or 7, wherein the crank mechanism comprises:

a crank shaft rotatably supported on a tracer main body facing horizontally and perpendicularly to the profiling direction,

a crank arm fitted to one end of the crank shaft, and

a crank pin fitted to one end of the crank arm eccentrically by e.

9. An apparatus for surface profiling as claimed in Claim 6, wherein the fulcrum part being fitted to one side of the tracer main body on the vertical line passing the rotation center of the crank shaft and on the lower position than the crank shaft, and the fulcrum part having a guide hole which allows the spindle to swing in the vertical plane and to move vertically.

10. An apparatus for surface profiling as claimed in Claim 9, wherein the fulcrum part having a hight adjusting mechanism.

11. An apparatus for surface profiling as claimed in Claim 6 or 7, wherein the limit means for circular motion being provided between the crank shaft and the tracer main body, and comprising of:

two hitting steps spaced at 180 degree intervals on the concentric circle to the crank shaft, and

a stopper provided for being hitted by the hitting steps.

12. An apparatus for surface profiling as claimed in Claim 6 or 7, wherein the spindle elevator means comprising of a servomotor connected to the crank shaft and forced always to rotate in constant direction, and the spindle elevator means operates to force always the spindle to move circularly downward, to stop forcing downward of the spindle when the stylus engages with the model and resistance thereof become predetermined value, and to make the spindle circularly move in opposite direction when the resistance become larger than the predetermined value.

13. An apparatus for surface profiling as claimed in Claim 6 or 7, wherein the detecting means for model surface comprising of:

a detecting means for horizontal and descent surface of the model designed to stop the forcing rotation of the servomotor when the stylus engaged with the surface and descent surface of the model and the resistance become equal to the predetermined value and designed to rotate the servomotor in opposite direction when the resistance become larger than predetermined value, and

a detecting means for ascent surface of the model designed to make the servomotor rotate in opposite direction detecting the spindle deflection caused by the resistance when the stylus engages with the ascent surface of the model.

14. An apparatus for surface profiling as claimed in Claim 4 or 5, which comprises:

a profiling speed command plate supported concentrically with the circular motion shaft of spindle to permit rotation at the same speed as the circular motion shaft with the outer periphery of the said command plate being of smooth curvature symmetrical to the straight line intersecting at right angles through the center of rotation so as to represent the posture of the stylus with respect to the model, and

two pairs of profiling speed detecting means located at 90 degree intervals on the circumference which is concentric with the circular motion shaft of the spindle corresponding to the outer periphery of the said command plate, in which these profiling speed detecting means are so connected as to generate signals according to the relative displacement from profiling speed detecting means on the outer periphery caused by rotation of the command plate so that the work table and the milling head can be moved in two directions which intersect with each other at right angle,

15.   An apparatus for surface profiling as claimed in Claim 4 or 5, wherein the profiling speed command plate of which distance from center of rotation to the outer periphery is so determined that it be symmetrical from near point   at zero degree up to positive and negative 90 degrees, and that it gradually increases according to the curvature of H (1-cosB) (where, H: maximum increment of distance from center of rotation of command plate to the outer periphery, B: an angle of radius vector with respect to symmetrical line of command plate), and that it be constant at other angle range than mentioned above.

16.   An apparatus for surface profiling as claimed in Claim 4 or 5, wherein two pairs of photo-electric elements mounted on the insulation disc fitted on the tracer main body and located at 90 degree intervals on the circumference which is concentric with the circular motion shaft of the spindle, in which these elements are so connected as the work table and the milling head to move in two directions which intersect with each other at right angle, and a light source being provided confronting to photo-electric elements.

1

Fig 1

0046807

2  Fig 2

Fig 2a

Fig 3

0046807

0046807

Fig 5

Fig 6

Fig 7          5     Fig 8a          Fig 8b

Fig 9a          Fig 9b          Fig 9c          Fig 9d

Fig 9e          Fig 9f          Fig 9g

Fig 10a          Fig 10b          Fig 10c          Fig 10d

Fig 10e          Fig 10f          Fig 10g

Fig 11                              Fig 12

Fig 15a  Fig 15b  Fig 15c

Fig 15d  Fig 15e  Fig 15f  Fig 15g

Fig 16a  Fig 16b  Fig 16c  Fig 16d

Fig 16e  Fig 16f  Fig 16g

0046807

# INTERNATIONAL SEARCH REPORT

**0046807**

International Application No  PCT/JP80/00322

## I. CLASSIFICATION OF SUBJECT MATTER (if several classification symbols apply, indicate all) [3]

According to International Patent Classification (IPC) or to both National Classification and IPC

Int. Cl.[3]  B23Q35/04

## II. FIELDS SEARCHED

### Minimum Documentation Searched [4]

| Classification System | Classification Symbols |
|---|---|
| I P C | B23Q35/00 - 35/48 |

### Documentation Searched other than Minimum Documentation to the Extent that such Documents are Included in the Fields Searched [5]

| | |
|---|---|
| Jitsuyo Shinan. Koho | 1927 - 1979 |
| Kokai Jitsuyo Shinan Koho | 1971 - 1979 |
| Kokai Tokkyo Koho | 1971 - 1979 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| A | JP, A,   51 - 44388 | 1 - 16 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [3] | Date of Mailing of this International Search Report [3] |
|---|---|
| February 20, 1981 (20.2.81) | March 2, 1981 (02.03.81) |

| International Searching Authority [1] | Signature of Authorized Officer [20] |
|---|---|
| Japanese Patent Office | |

Form PCT/ISA/210 (second sheet) (October 1977)